# FASCICULE DE BREVET EUROPEEN

(11) **EP 0 626 252 B1**
(45) Date de publication et mention de la délivrance du brevet: **03.03.1999**
(21) Numéro de dépôt: 94450003.2
(22) Date de dépôt: 24.05.1994
(51) Int. Cl.: B29C 70/00, B29C 53/80

(54) **Machine pour le bobinage-dépose au contact simultané d'une pluralité de fils individuels**
Vorrichtung zum simultanen Kontaktwicklen von mehreren individuellen Fasern
Machine for contact winding a plurality of individual yarns simultaneously

(30) Priorité: 26.05.1993 FR 9306613
(43) Date de publication de la demande: 30.11.1994
(73) Titulaire: AEROSPATIALE Société Nationale Industrielle, 75781 Paris Cédex 16 (FR)
(72) Inventeur: Cahuzac, Georges Jean Joseph, F-33110 Le Bouscat (FR); Jollivet, Bernard André, F-33185 Le Haillan (FR); Baudry, Jean-Claude, F-33600 Pessac (FR); Dubearn, Bruno, F-33700 Merignac (FR); Sabary, Laurent, F-33560 Carbon-Blanc (FR)
(74) Mandataire: Thébault, Jean-Louis

(56) Documents cités:
- EP-A- 0 267 865
- EP-A- 0 361 828
- US-A- 4 679 291
- US-A- 4 699 683
- US-A- 4 917 756

## Description

La présente invention a trait à la réalisation de structures en matériau composite et plus précisément de pièces de forme plus ou moins complexe, constituées par la superposition sur un support approprié de couches de fibres continues pré-imprégnées mises en place par bobinage et/ou dépose au contact.

L'invention vise la réalisation d'une machine polyvalente capable aussi bien de bobiner ou enrouler que de déposer au contact plusieurs fils simultanément sur un même support et plus précisément encore un nombre important de fils.

Par fil on entend dans la présente description un groupe de fibres continues, agglomérées, en forme de ruban ou bande, stocké sur une bobine.

On connaît déjà diverses machines capables d'effectuer un bobinage ou une dépose au contact de plusieurs fils pré-imprégnés en même temps.

Le document EP-0.361.828 décrit une machine de dépose au contact de plusieurs fils disposés en une nappe et appliqués par une tête mobile suivant plusieurs axes, supportée par un portique et agencée en sorte de déposer les fils sur un corps en rotation autour d'un axe horizontal.

Les fils sont déroulés à partir de bobines embarquées sur l'équipage mobile porte-tête.

Un tel agencement se traduit par un encombrement et un poids important de l'équipage mobile portant les bobines, limitant substantiellement le nombre de fils distincts à déposer et les capacités de mouvement dans l'espace de la tête de dépose.

Suivant un autre inconvénient, si un problème survient sur l'une des bobines, une cassure de fil par exemple, l'accessibilité à la bobine pour dépannage est problématique et délicate notamment si la pièce en cours de revêtement est importante.

Le document US-4.679.291 a trait à un même type de machine portique pour la dépose au contact de fibres sur la paroi d'un moule fixe. Cette machine présente les mêmes inconvénients, encore plus accentués pour ce qui concerne les capacités de mouvement et positionnement de la tête de dépose et l'accessibilité aux bobines de fils, du fait que la pièce à revêtir est immobile et de dimensions très importantes.

Par le document US-4.699.683, correspondant à l'état de la technique défini dans le préambule de la revendication 1, on connaît également une machine portique pour la dépose au contact simultanée de plusieurs fils sur une pièce, à l'aide d'un organe applicateur porté par une tête de dépose multi-axes agencée de manière à supporter elle-même les bobines de fil.

Un tel agencement des bobines alourdit considérablement la tête de dépose, amoindrit substantiellement sa manoeuvrabilité et sa capacité de positionnement dans l'espace. Il est à noter à ce propos que la mobilité de la tête de dépose est possible suivant les trois directions cartésiennes X, Y, Z et seulement deux axes de rotation, d'une part vertical et, d'autre part horizontal et orthogonal à l'axe de l'organe applicateur de fils, ce qui limite les possibilités de placement de la tête qui ne peut donc pivoter autour d'un axe parallèle à celui dudit organe applicateur.

L'invention vise à remédier à ces problèmes et inconvénients en proposant une machine capable d'effectuer indifféremment un bobinage sur une pièce en rotation autour d'un axe ou une dépose au contact sur une pièce fixe ou mobile, de plusieurs fils simultanément à l'aide d'une tête à la fois maniable et légère.

A cet effet, l'invention a pour objet une machine pour le bobinage-dépose au contact simultané d'une pluralité de fils individuels, comprenant :
- un portique supportant une platine porte-tête de bobinage-dépose au contact, mobile dans les trois directions de repérage cartésien,
- au moins une tête de bobinage-dépose au contact montée mobile en rotation sur la platine autour d'au moins un axe vertical et comportant une roulette de bobinage-dépose au contact mobile sur la tête en direction du support à revêtir, des moyens de présentation sur ladite roulette des fils suivant au moins deux nappes tangentes, des moyens sélectifs d'entraînement et de coupe de chaque fil, et
- une pluralité de bobines délivrant lesdits fils,
caractérisée en ce que lesdites bobines sont montées sur un cantre et les fils sont guidés entre le cantre et la ou chaque tête de bobinage-dépose au contact par des jeux de poules de renvoi destinées à guider les fils entre le cantre fixe et la ou chaque tête, lesdits jeux comprenant, d'une part, un premier jeu de poulies fixes d'axe horizontal, proche du sol et orthogonal au support à revêtir, d'autre part, un deuxième jeu de poulies solidaires de ladite platine porte-tête(s) et d'axe parallèle à celui du premier jeu, les deux jeux susdits étant agencés de façon que les fils entre le premier et le second jeu se déplace dans un plan sensiblement vertical, en fonction du mouvement de la ou des têtes et, enfin, un troisième jeu de poules en cascade également solidaires de ladite platine et amenant les fils dudit deuxième jeu de poulies à un jeu de poulies fixé sur ladite platine au dessus de la ou chaque tête .

Suivant une application de l'invention au bobinage-dépose au contact de pièces allongées entraînées en rotation autour de leur axe, la machine comporte plusieurs têtes montées en parallèle sur la platine, alimentées en fils par le même cantre et aptes à revêtir par bobinage ou dépose au contact simultanément autant de pièces, disposées en parallèle sur un même banc assurant la rotation de chaque pièce en synchronisme avec la machine.

Suivant une autre caractéristique, chaque tête de bobinage-dépose au contact comporte :
- une bride circulaire munie d'un passage central pour les fils et fixée à une pièce montée sur ladite platine, entraînée en rotation autour dudit axe vertical et munie d'un passage central pour les fils,
- un support monté sur la bride en sorte de se déplacer en translation suivant un axe confondu avec l'axe de rotation de la tête, ledit support portant ladite roulette de bobinage-dépose au contact et lesdits moyens d'entraînement et coupe des fils ainsi que des jeux de poulies de guidage des fils et anti-retour,
- lesdits fils étant amenés en étant regroupés en un faisceau parallèle sensiblement dans l'axe desdites bride et pièce rotative et guidés à l'aide d'une grille guide-fil montée libre en rotation dans ledit passage central de ladite pièce rotative.

Suivant encore une autre caractéristique de la machine, chaque fil de chaque tête de bobinage-dépose au contact comporte un dispositif d'entraînement comprenant un galet monté sur une roue libre entraînée en même temps que la roulette de bobinage-dépose au contact mais avec une vitesse légèrement inférieure à celle de ladite roulette, un galet presseur d'application ou non du fil contre le galet entraîneur et un dispositif anti-retour de fil en cas de coupe d'un fil.

Suivant encore une autre caractéristique de la machine, chaque tête de bobinage-dépose au contact comporte un dispositif de compactage des fils plaqués sur la pièce à revêtir, disposé à proximité immédiate de la roulette de dépose et constitué de deux roulettes indépendantes, libres en rotation autour de deux axes qui passent respectivement au milieu de la zone de contact de chaque roulette avec la surface à revêtir et permettent l'orientation de chaque roulette indépendamment par rapport à cette surface, des moyens étant prévus pour plaquer en permanence lesdites roulettes contre la surface à recouvrir.

Suivant une application de l'invention à la dépose au contact de pièces statiques, la tête de bobinage-dépose au contact est pourvue de deux autres axes de rotation.

A cet effet, suivant un mode de réalisation, ladite bride de chaque tête de bobinage-dépose au contact est montée rotative sur une première embase, elle-même montée rotative sur une seconde embase, montée rotative sur ladite platine autour dudit axe vertical, l'axe de rotation de la première embase étant perpendiculaire à la fois à l'axe de rotation de ladite bride et à l'axe de rotation de ladite seconde embase.

Suivant encore un autre caractéristique de la machine, le cantre est muni, pour chaque fil, d'un dispositif de délivrance-freinage-annulation de tension de dévidage comprenant un moteur pneumatique d'entraînement en rotation de la bobine de fil et un dispositif d'asservissement du type pantin constitué d'un moto-variateur électrique entraînant une poulie de tirage du fil, d'un pantin, d'un potentiomètre dont l'axe de rotation est solidaire de l'axe de rotation du pantin et dont le point milieu commande l'entrée du variateur dudit moto-variateur et d'un moyen de contrôle du bras dudit pantin, en vue de permettre le dévidage du fil avec des tensions appropriées au bobinage et à la dépose au contact.

D'autres caractéristiques et avantages ressortiront de la description qui va suivre d'un mode de réalisation d'une machine selon l'invention, description donnée à titre d'exemple uniquement et en regard des dessins annexés sur lesquels :
- Figure 1 est une vue schématique en élévation latérale d'une machine selon l'invention ;
- Figure 2 est une vue de gauche de la machine de la figure 1 ;
- Figure 3 représente la machine de la figure 1 vue de l'autre côté ;
- Figure 4 est une vue de dessus de la machine de la figure 1 ;
- Figure 5 est une vue de dessus de l'ensemble des têtes de bobinage-dépose au contact de la machine ;
- Figure 6 est une vue en élévation latérale d'une tête de bobinage-dépose au contact ;
- Figure 7 est une vue en coupe suivant la ligne A-A du dispositif de la figure 6 montrant uniquement et partiellement les organes représentés sur cette figure 6 ;
- Figure 8 est une vue en coupe suivant la même ligne A-A du dispositif de la figure 6, montrant les organes servant à assurer une pression constante de la roulette de dépose ;
- Figure 9 est une vue de la tête de bobinage-dépose de la figure 6 montrant la face de la tête opposée à celle de la figure 6 ;
- Figure 10 est une vue partielle de dessus de la tête de bobinage-dépose de la figure 6 montrant l'arrivée des fils et la disposition latérale de la plaque-support de la tête ;
- Figure 11 est une vue partielle en coupe suivant la ligne B-B de la figure 9, des moyens d'actionnement des dispositifs de coupe des fils ;
- Figure 12 est une vue en éclaté d'un dispositif de coupe de fil ;
- Figure 13 est une vue en élévation latérale d'un dispositif de compactage associé à la tête de bobinage-dépose au contact ;
- Figure 14 est une vue de dessus du dispositif de compactage de la figure 13 ;
- Figure 15 est une vue de droite du dispositif de compactage de la figure 13 ;
- Figure 16 est une vue schématique en perspective des moyens de dévidage-freinage et réduction de tension d'un fil du cantre selon l'invention ;
- Figure 17 représente une variante de réalisation d'une tête de dépose au contact à trois axes de rotation concourants ;
- Figure 18 est une vue agrandie de la structure de montage interposée entre la tête de la figure 17 et la poutre porte-tête mobile en Z ;
- Figure 19 est une vue en coupe suivant la ligne C-C du dispositif de la figure 18, et
- Figure 20 est une vue en coupe suivant la ligne D-D du dispositif de la figure 19.

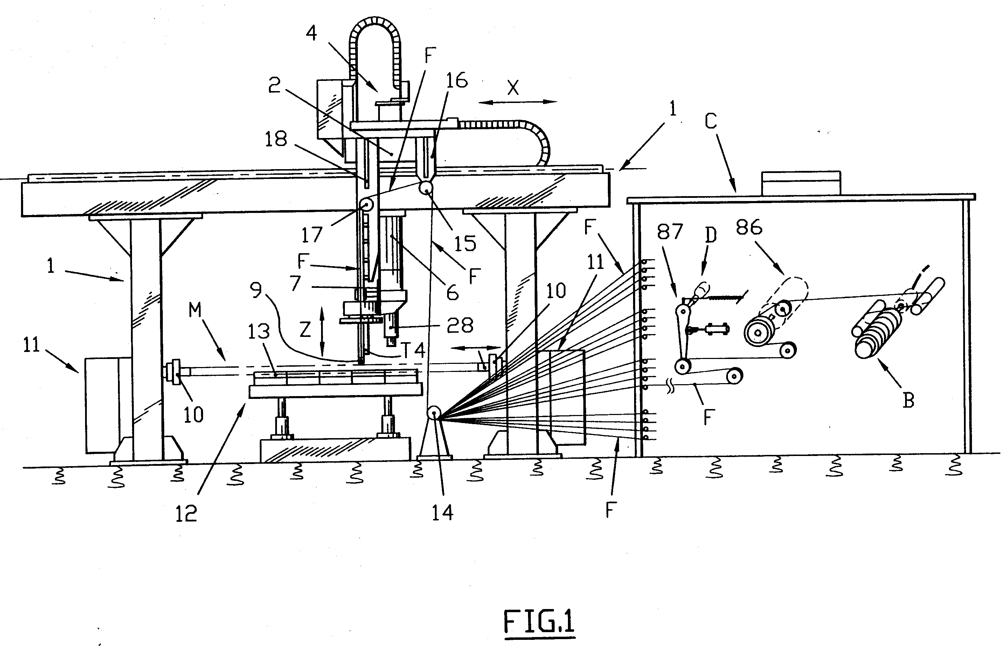

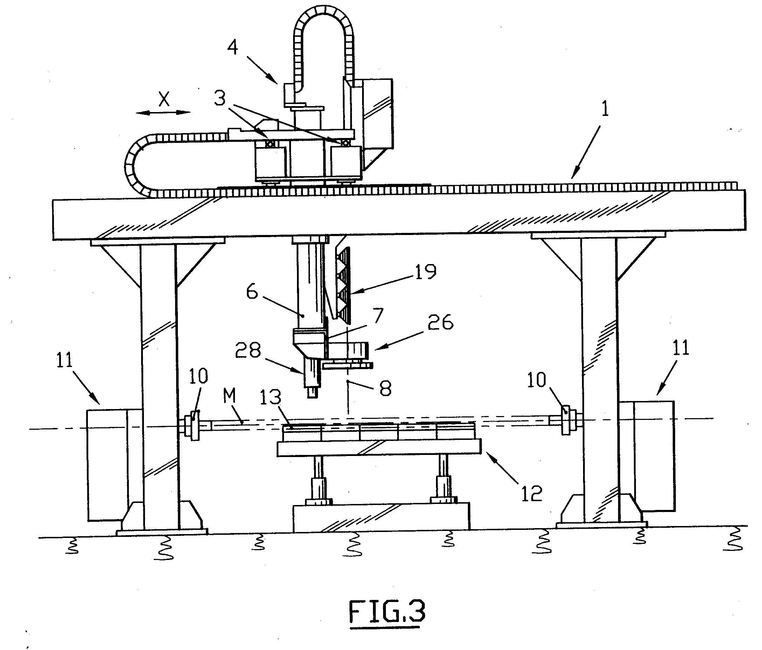

Sur les figures 1 à 4 on a représenté schématiquement une machine de bobinage-dépose au contact selon l'invention et plus précisément une machine à quatre têtes de bobinage-dépose au contact travaillant en parallèle.

La machine comprend, à la manière connue, un portique 1 portant un premier chariot 2 mobile suivant une première direction horizontale X parallèle à l'axe longitudinal du portique 1, à l'aide de moyens moteurs embarqués 3 appropriés.

Le chariot 2 porte un second chariot 4 mobile suivant une seconde direction horizontale Y perpendiculaire à la direction X, à l'aide de moyens moteurs appropriés 5 embarqués sur le chariot 4.

Le second chariot 4 porte une poutre verticale 6 montée mobile verticalement sur le chariot 4 suivant une direction Z.

A l'extrémité inférieure de la poutre 6 est fixée une platine 7 porte-tête de bobinage-dépose au contact, en forme de poutre horizontale.

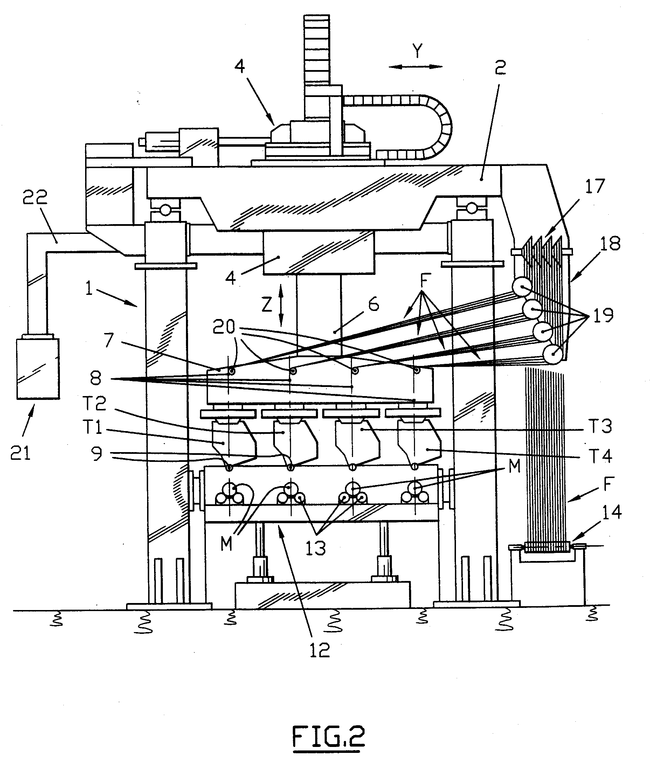

Dans le mode de réalisation représenté sur les figures 1 à 4, la platine 7 porte quatre têtes identiques T1 à T4 (représentées schématiquement uniquement sur les figures 1 et 2) disposées côte-à-côte en ligne, suivant l'axe transversal du portique, c'est-à-dire suivant la direction Y, mais la platine pourrait tout aussi bien porter un nombre différent de têtes, un, deux ou trois, ou même un nombre supérieur à quatre.

Toutes les têtes T1 à T4 sont montées mobiles en rotation sur la poutre-platine 7 autour d'un axe vertical symbolisé en 8. Chaque tête T1 à T4 comporte une roulette 9 de bobinage-dépose au contact d'axe horizontal.

Les têtes T1 à T4 sont susceptibles d'être amenées en regard ou au contact chacune d'un mandrin symbolisé en M sur les figures 1 à 4, sur lequel doit être réalisée une pièce, par exemple une bielle en matériau composite.

A cet effet, les mandrins M sont placés en parallèle à l'horizontale suivant la direction X, entre deux poupées 10 d'un banc de tournage multi-poste 11, les mandrins M étant présentés au banc et, après bobinage-dépose au contact, enlevés, à l'aide d'une table 12 mobile en hauteur, portant des rouleaux fous 13 de support des mandrins M en regard respectivement de chaque tête T1 à T4.

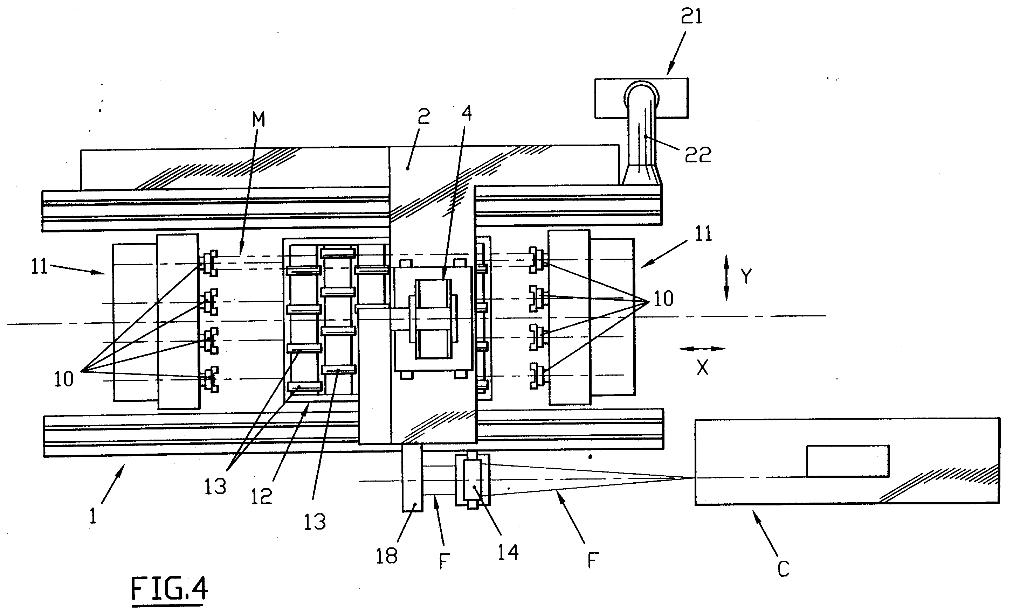

Comme on le verra plus en détail ci-après, chaque tête T1 à T4 est alimentée par six fils symbolisés en F sur les figures 1 à 4, provenant, selon une caractéristique essentielle de l'invention, de bobines B portées par un cantre statique C totalement distinct des têtes ainsi que du portique 1 et placé dans l'un des angles du portique (figure 4) en sorte de délivrer tous les fils F, soit vingt-quatre au total, suivant une nappe située dans un plan vertical parallèle à l'axe longitudinal (direction X) dudit portique 1, latéralement à ce dernier. Par souci de clarté, on n'a représenté sur les figures 1 et 2 que quatre fils F par tête de bobinage-dépose au contact T1 à T4 et le cantre C est symbolisé par un rectangle à l'intérieur duquel est représenté, en vue agrandie, le dispositif D de dévidage-freinage-régulation de tension d'un fil F. Bien entendu à chaque fil F délivré par le cantre correspond dans celui-ci un dispositif D identique à celui représenté sur la figure 1, un tel dispositif étant par ailleurs décrit plus loin.

Suivant un autre aspect de l'invention, les fils F sont disposés dans l'espace et guidés, entre le cantre C et les têtes T1 à T4, de manière à balayer le minimum d'espace lors des déplacements des têtes et à réduire les à-coups de la vitesse de dévidage des fils.

A cet effet, la nappe verticale de fils F est délivrée par le cantre C latéralement à l'espace d'évolution des têtes de bobinage-dépose en étant envoyée sur un jeu de poulies de renvoi 14, identiques, portées par un axe horizontal parallèle à la direction Y, fixe et disposé au voisinage du sol et de l'extrémité, côté cantre C, des pièces en cours de bobinage-dépose au contact.

Les poulies 14 renvoient les fils F sur une série identique de poulies 15 portées par un axe parallèle à celui des poulies 14 et reliées au chariot 2 par l'intermédiaire d'un support 16.

Les poulies 15 dirigent les fils F sur une autre série 17 de poulies montées sur un axe parallèle à celui des poulies 15 et reliées au chariot 2 par un support 18.

Les poulies 17 sont réparties en quatre jeux, à savoir un par tête de bobinage-dépose au contact T1 à T4, de six poulies à diamètres différents en cascade, chargées d'amener les fils sensiblement au niveau (dans la direction X) des têtes T1 à T4.

Les fils F passent ensuite des poulies 17 à une autre série de quatre jeux de poulies 19 chargées de diriger les fils vers la poutre horizontale 7 porte-têtes.

Les poulies 19 présentent dans chaque jeu des diamètres différents en cascade, sont disposées suivant des axes orthogonaux à l'axe des poulies 17 et décalées à la fois en hauteur et latéralement.

Les poulies 19 sont disposées en hauteur le plus près possible de la poutre 7 en demeurant à hauteur suffisante pour passer au-dessus de la tête des opérateurs de la machine.

Les fils F sont reçus sur la poutre 7 sur des poulies identiques 20 placées sur un axe parallèle à celui dès poulies 19 et donc à la direction X, à l'aplomb des quatre têtes T1 à T4.

Enfin, on a représenté en 21 (figures 2 et 4) une console de commande/contrôle de la machine, suspendue à une poutre 22 solidaire du portique 1, à l'un de ses angles (figure 4).

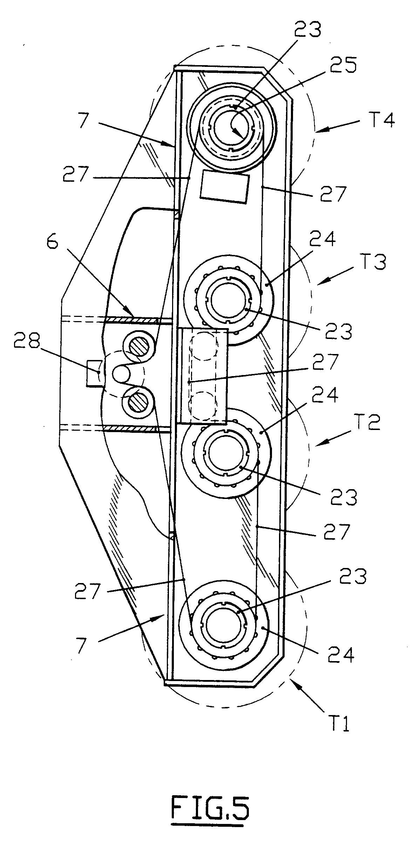

On va maintenant décrire selon un premier mode de réalisation, l'une des têtes de bobinage-dépose au contact de la machine en se reportant aux figures 5 à 12.

La tête de bobinage-dépose au contact T représentée sur la figure 5 est montée mobile en rotation autour d'un seul axe vertical 8 sur la poutre-platine 7, par l'intermédiaire d'une pièce tournante 23 à la partie inférieure de laquelle est fixée une bride circulaire 24 sur laquelle est montée la tête T.

La pièce tournante 23 présente un puits central 25 coaxial à l'axe 8 pour le passage des fils F et est montée tourillonnante sur un ensemble support annulaire 26 rapporté latéralement à la poutre-platine 7.

L'entraînement en rotation de la pièce 23 s'effectue à l'aide d'une courroie crantée 27 mue par un moteur électrique 28 également solidaire de la poutre 7, un seul moteur 28 entraînant par une même courroie 27 les différentes têtes de bobinage-dépose T1 à T4 (figure 5) de la machine.

Au dessus du puits 25 de la pièce tournante 23 sont disposées lesdites poulies 20 renvoyant vers la tête T les fils F qui sont guidés dans ledit puits 25 par une grille en forme de disque circulaire 29 percé de six trous 30 pour les six fils F. Le disque 29, d'axe coaxial à l'axe 8, est monté mobile en rotation à l'extrémité inférieure d'une tige support 31 dont l'extrémité est fixée à une potence 32 solidaire de la poutre-platine 7.

La bride 24 est également percée d'un trou central 33 coaxial au puits 25, pour le passage des fils F.

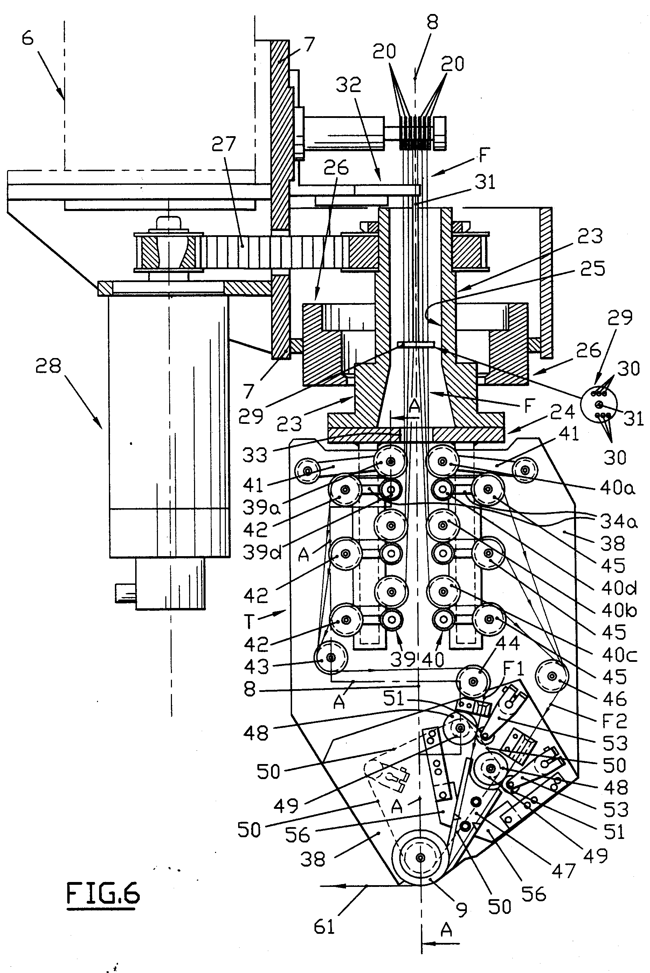

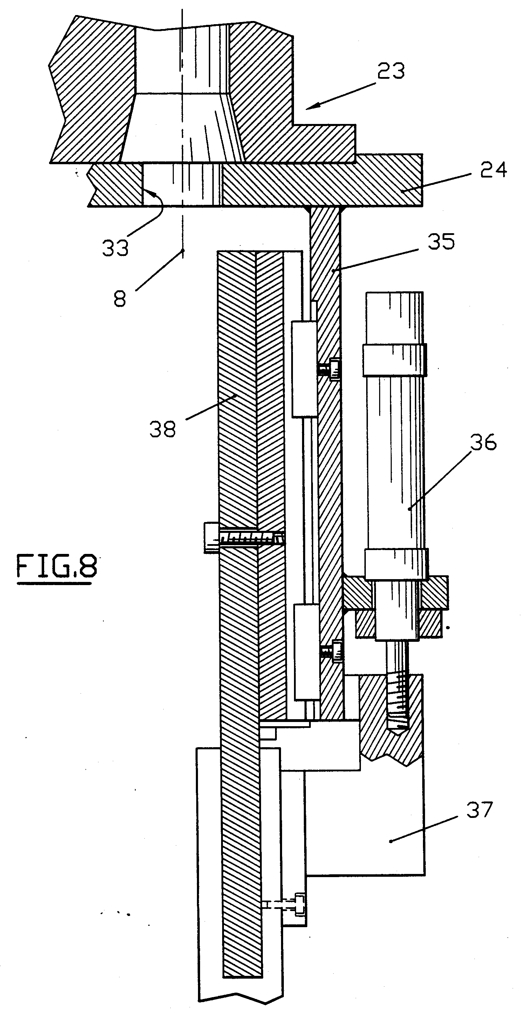

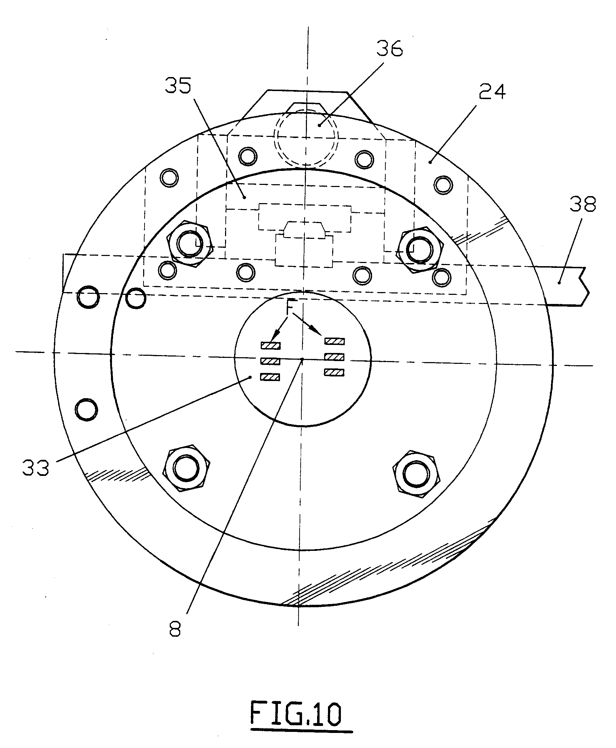

Sur la face inférieure de la bride 24, latéralement au trou 33 (figures 8 et 10), est rapporté (figure 8) un support vertical 35 portant un vérin 36 de déplacement, verticalement, via une pièce de liaison 37, d'une plaque-support 38, légèrement déportée par rapport à l'axe 8 et au trou 33. La plaque-support 38 porte, du côté opposé au vérin 36, les moyens d'amenée-guidage des fils F à la roulette 9 de bobinage-dépose au contact et les divers autres moyens de poussage, coupe, retenue des fils, que l'on va maintenant décrire plus en détail et qui, par souci de clarté, ne sont pas représentés sur les figures 8 et 10, mais seulement sur les figures 6, 7, 9 à 12.

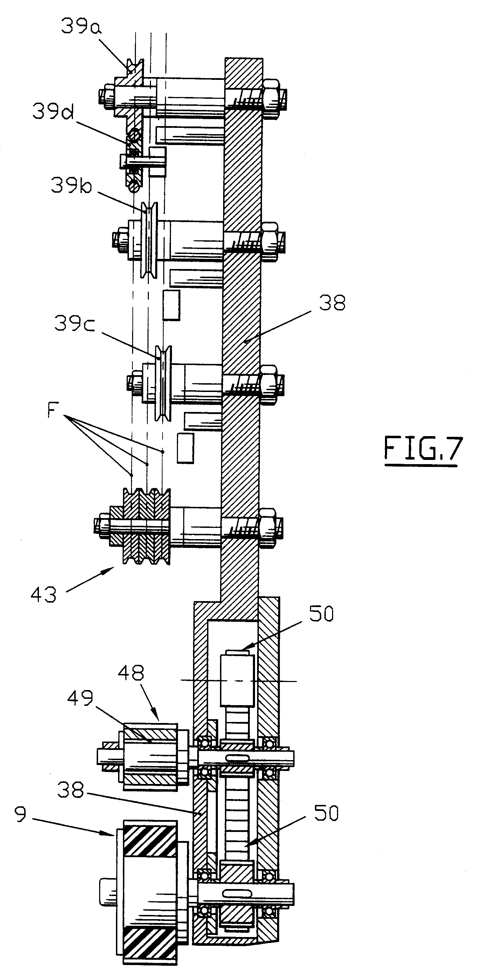

La plaque 38 est guidée verticalement par des moyens appropriés le long de la pièce fixe 35 et porte, en-dessous et de part et d'autre du puits formé par le trou 33 deux séries 39 et 40 en vis à vis de poulies 39a, 39b, 39c ; 40a, 40b, 40c (figures 6 et 7) montées sur roue libre anti-retour de fil et coopérant chacune avec un galet fou 39d, 40d pourvu d'un joint torique appuyant le fil en fond de gorge de la poulie associée en fin de zone de contact du fil sur ladite poulie. Les poulies 39a,39b,39c ; 40a,40b,40c sont montées sur des leviers oscillants 41 à des fins de dégagement pour la mise en place des fils.

Les fils du jeu de poulies 39 sont dirigés (figure 6), via des poulies de renvoi 42,43, sur un jeu 44 de trois roulettes à gorge jumelées, cependant que les fils du jeu de poulies 40 sont dirigés, via des poulies de renvoi 45, sur un jeu 46 de trois autres roulettes à gorge jumelées.

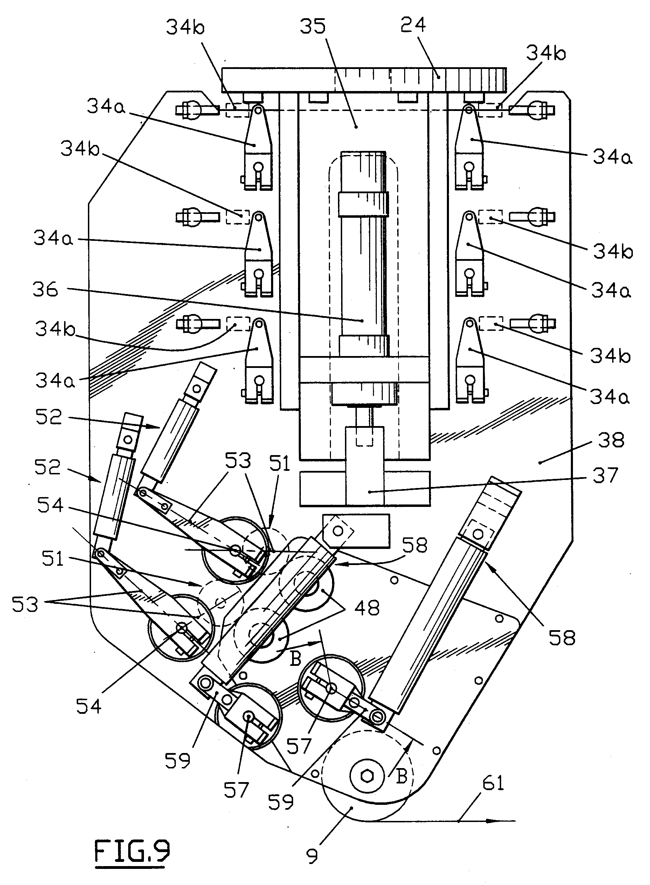

Sur l'axe des poulies 42,45 est articulé (figures 6 et 9) un levier en équerre 34a portant à une extrémité (figure 6) un galet 39d,40d dont l'autre extrémité (figure 9) est sollicitée par un ressort 34b de réglage de la pression dudit galet.

Les jeux de roulettes 44,46 sont chargés, à la manière connue, de présenter les fils en deux nappes F1 et F2 de trois fils côte à côte, dirigées tangentiellement à la roulette 9 de bobinage-dépose au contact.

Entre les roulettes 44,46 et la roulette 9 est disposé un sabot 47 en forme de coin sur les deux faces opposées duquel sont dirigées les deux nappes F1,F2.

En amont du sabot 47 est prévu un dispositif de poussage des fils comprenant, pour chaque nappe F1,F2, un galet d'entraînement 48 monté sur une roue libre 49 (figures 6 et 7) et entraîné par une courroie crantée 50 en prise également avec la roulette 9.

Chaque galet 48 coopère avec trois galets presseurs antagonistes 51 d'entraînement des trois fils de la nappe considérée (F1,F2).

Les trois galets 51 d'un même galet 48 sont superposés et commandés indépendamment par trois vérins pneumatiques 52 plats, superposés, agencés (figure 9) sur la face de la plaque 38 opposée à celle sur laquelle sont disposés les galets 48,51.

Les vérins 52 actionnent sélectivement les galets 51 via un système de levier 53 articulé autour d'un axe 54 traversant la plaque support 38.

Lorsqu'un galet 51 est amené par son vérin de commande 52 en contact avec le galet 48 associé, le fil correspondant est coincé et entraîné par ledit galet 48.

Par contre, lorsque ledit galet 51 est éloigné dudit galet 48, le fil n'est pas entraîné.

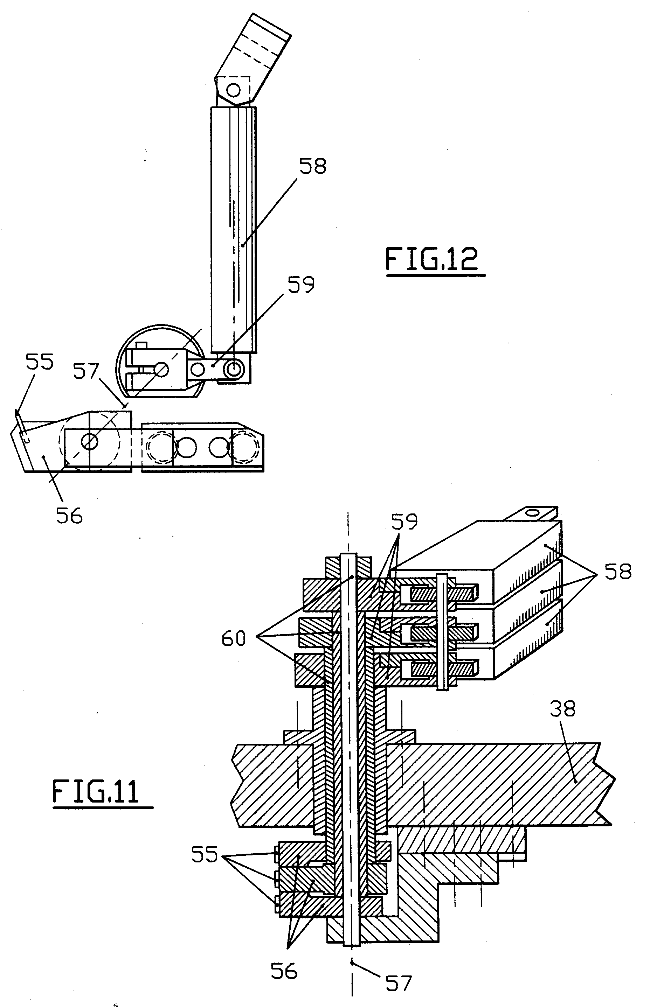

Sur les deux faces opposées du sabot sont disposés deux jeux de trois dispositifs de coupe de fil dont le principe est bien connu. Les trois dispositifs de coupe de chaque jeu sont disposés côte à côte en regard des fils correspondants et sont constitués à la manière connue d'une lame de coupe 55 (figures 11,12) montée à l'extrémité d'un levier articulé 56.

Sur les figures 11 et 12 on a représenté trois leviers 56 portant chacun une lame 55 et montés, conformément à l'invention, oscillant sur un axe commun 57 traversant la plaque support 38, les organes de coupe étant d'un côté de la plaque et les moyens de commande étant disposés de l'autre côté (figure 9).

Ces moyens de commande sont constitués de trois vérins pneumatiques 58, plats, superposés, agissant par des leviers appropriés 59 sur des pièces 60 (tubulaires ou pleines), coaxiales à l'axe 57 et superposées, commandant chacune un levier 56.

Suivant une autre caractéristique de la tête de bobinage-dépose au contact selon l'invention, les galets 48 sont déterminés de façon à avoir une vitesse périphérique légèrement inférieure à celle de la roulette 9. Ceci, combiné au montage des galets 48 sur une roue libre 49, présente un intérêt particulier en cas de coupe d'un fil. En effet, lorsqu'un fil est coupé par l'un des dispositifs (55), les deux extrémités de ce fil vont s'éloigner l'une de l'autre du fait que la vitesse d'entraînement communiquée par la roulette 9 est supérieure à celle des galets 48. Ainsi, l'extrémité aval sera mise en place par la roulette 9 sans que l'extrémité amont, qui se trouve en retrait, soit appliquée par la roulette sur la pièce à revêtir. Lorsque l'extrémité amont atteint la roulette 9 elle sera prise en charge par cette dernière qui lui communiquera une accélération pour lui redonner sa vitesse normale de défilement.

Ces mouvements différentiels sont permis par la roue libre 49.

Sur les figures 6 et 9, on a représenté en 61 les six fils en nappe unique déposés au contact côte-à-côte par la roulette 9 sur une pièce (non représentée).

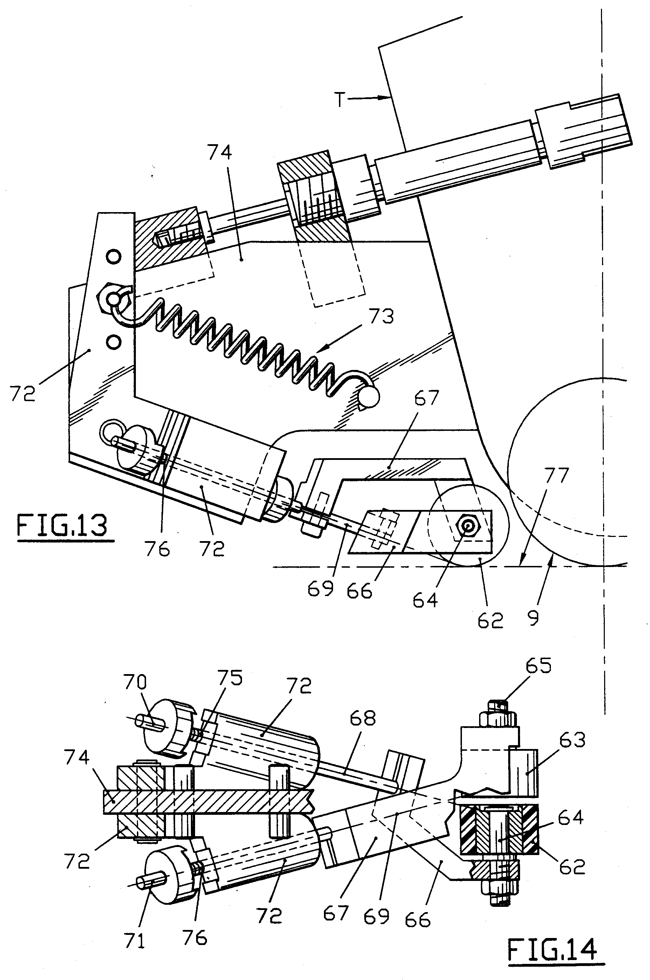

Suivant une autre caractéristique de l'invention, la machine est munie d'un dispositif de compactage des fils en place 61 monté à hauteur de la roulette 9 et à proximité immédiate de celle-ci, un tel dispositif étant représenté en détail sur les figures 13 à 15.

Le dispositif comprend deux roulettes 62,63 montées libres en rotation sur deux axes 64,65 fixés à l'extrémité de deux bras 66,67 montés rotatifs autour de deux axes 68,69 qui passent respectivement au milieu de la zone de contact de chaque roulette avec la surface à revêtir et permettent l'orientation de chaque roulette indépendamment par rapport à cette surface.

Les tiges 70 et 71 définissant les axes 68,69 sont montées libres en rotation chacune sur une pièce coudée 72 sollicitée par un ressort 73 ancré sur une platine 74 de fixation du dispositif de compactage sur la tête T.

Des ressorts hélicoïdaux 75,76 enfilés sur les tiges 70,71 sont chargés de rappeler constamment les roulettes 62,63 dans leur position jumelée (coaxiales et côte-à-côte) représentée sur les figures 13 à 15.

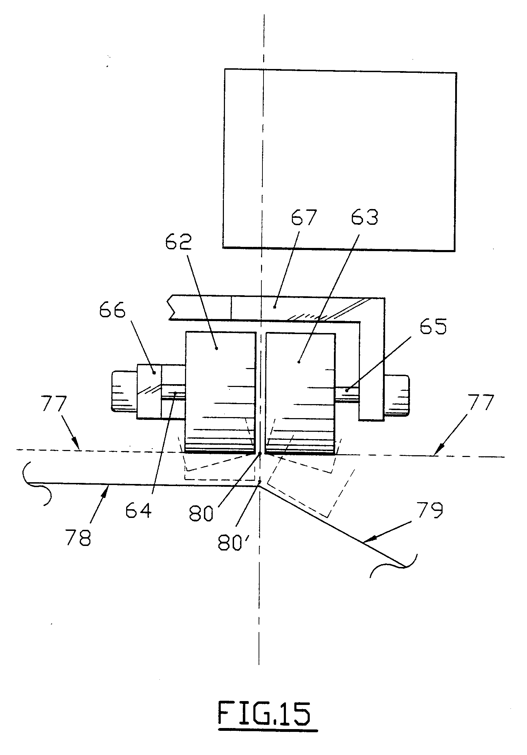

En regard d'une surface plane comme illustré en 77 sur les figures 13 et 15, les roulettes 62,63 demeurent dans la position jumelée et, ce, quelle que soit l'éloignement, suivant la verticale Z, de la paire de roulettes 62,63 vis à vis de la tête de dépose T.

Lorsque les roulettes 62,63 se trouvent en regard de pans de surface différents, comme illustré en 78 et 79 sur la figure 15, les roulettes épousent leur pan respectif en se déplaçant indépendamment l'une de l'autre, tout en demeurant sensiblement en tangence au niveau de leur arête inférieure 80, et, ce, grâce à l'action permanente des ressorts 73 plaquant les roulettes contre la surface, quelle que soit l'inclinaison mutuelle des pans de surface 78,79 et quel que soit (80') l'éloignement, suivant l'axe vertical Z, des roulettes 62,63 vis à vis de la tête de dépose T, comme illustré en tiretés sur la figure 15.

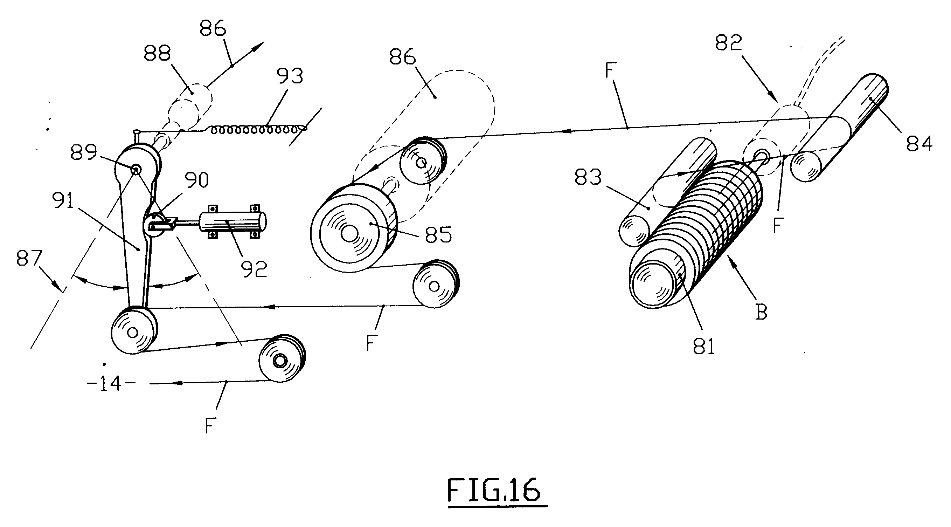

La figure 16 est une vue agrandie du dispositif de délivrance d'un fil du cantre C symbolisé sur la figure 1.

Le cantre C est constitué d'une armoire dans laquelle sont logées des bobines B de fil en nombre égal à celui des fils utilisés ou susceptibles d'être utilisés par la machine.

Les bobines B sont disposées horizontalement et montées sur un tambour 81 entraîné en rotation par un moteur pneumatique 82.

Le fil F passe sur un rouleau lécheur 83 puis sur un rouleau 84 de renvoi vers un dispositif d'asservissement du type pantin comprenant une poulie 85 mue par un moteur électrique à variateur de vitesse 86, un pantin 87 et un potentiomètre 88 dont l'axe de rotation est solidaire de l'axe de rotation 89 du pantin 87 et dont le point milieu commande l'entrée du variateur du moteur 86.

Le pantin 87, dont le principe est bien connu, comporte un galet 90 de contrôle du bras pivotant 91 du pantin, mû par la tige d'un vérin pneumatique 92, le bras 91 étant rappelé élastiquement par un ressort 93.

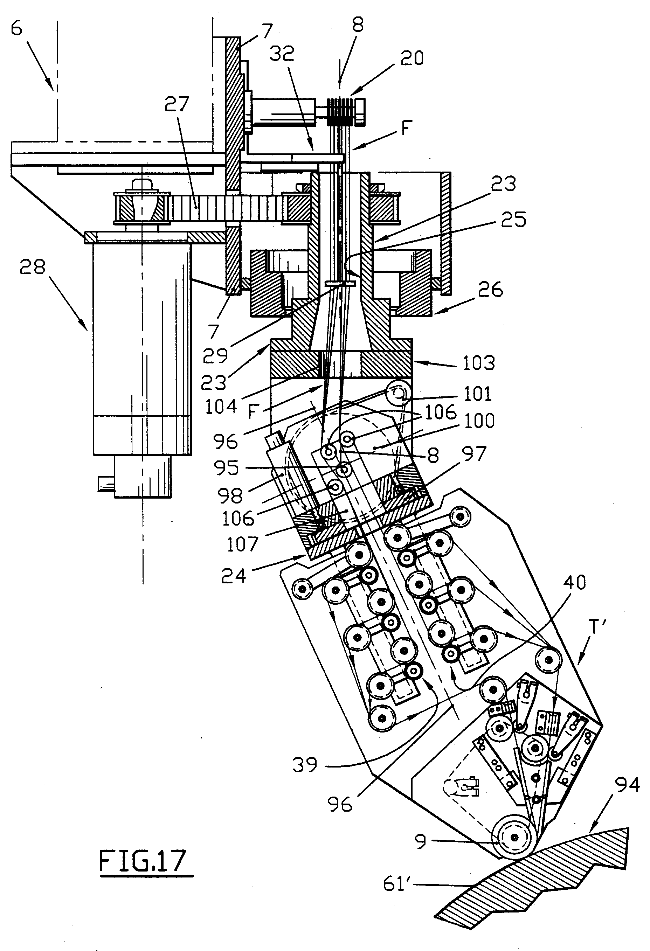

Les figures 17 à 20 illustrent une variante de réalisation de la ou chaque tête T' de bobinage-dépose au contact, plus particulièrement destinée à la dépose au contact sur une surface présentant une pente importante, 45° par exemple, par exemple convexe ou concave, symbolisée en 94. Cette surface 94 appartient à une pièce pouvant être entraînée en rotation ou à une pièce statique, c'est-à-dire non entraînée en rotation autour d'un axe horizontal, cette surface pouvant être placée sur un support permettant de modifier la position dans l'espace, ou présentation, de la pièce à revêtir en regard de la tête de dépose T'.

La tête T' est identique à la tête T de la figure 6 avec cette seule différence qu'elle est montée sur la platine 7 porte-têté en sorte de pivoter non seulement autour de l'axe vertical 8, mais également autour d'un axe horizontal 95 perpendiculaire à l'axe 8 et à la direction Y, ainsi qu'autour d'un axe 96 intersectant les axes 8 et 95 et coaxial à l'axe de déplacement de la roulette 9 de bobinage ou dépose sur la tête T' en direction de la pièce à revêtir.

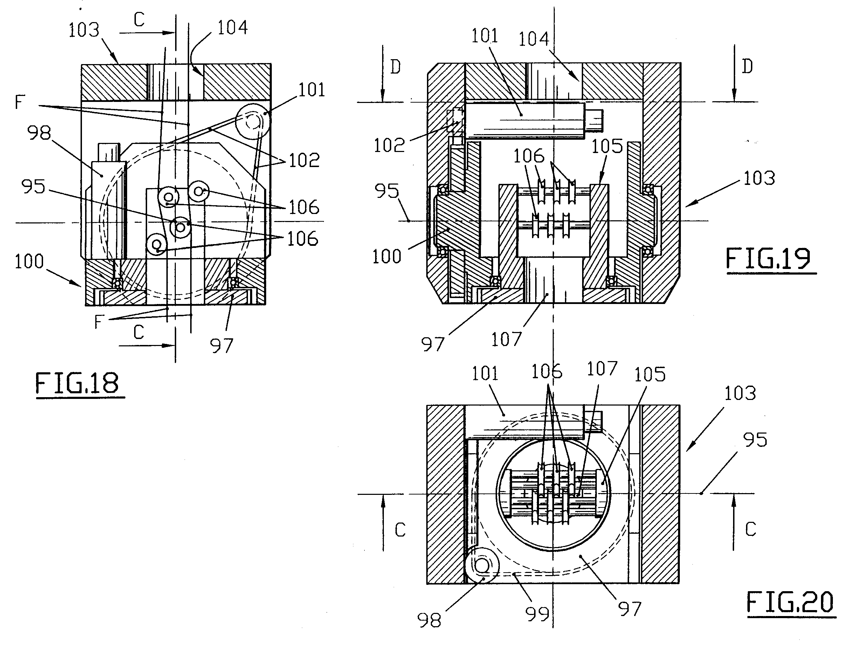

A cet effet, la tête T' comporte une bride 24 analogue à celle de la tête T de la figure 6, fixée sur une couronne rotative 97 entraînée en rotation autour de l'axe 96 par un moteur électrique 98 par exemple (figures 18 à 20) par l'intermédiaire d'une courroie crantée 99.

La couronne 97 et le moteur 98 sont portés par une première embase 100 montée articulée autour de l'axe horizontal 95 sous l'action d'un moteur électrique 101 et par l'intermédiaire d'une courroie crantée 102.

L'embase 100 et le moteur 101 sont portés par une seconde embase 103 montée rotative autour de l'axe 8 en étant fixée à la pièce tournante 23.

L'embase 103 est pourvue d'un passage 104 pour les fils F.

L'embase 100 est agencée pour permettre le passage des fils F en direction de la tête T' et comporte à cet effet (figures 19, 20) une chape 105 solidaire de la couronne 97 et portant des poulies 106 de guidage des fils. La couronne 97 et la chape 105 sont bien entendu munies d'un passage central 107 pour les fils.

Comme on peut le voir sur les figures 18 à 20, les poulies 106 sont disposées de façon à assurer le décalage mutuel dans l'espace des six fils F pour une bonne distribution en direction des deux jeux de poulies 39 et 40 de prise en charge des fils sur la tête T'.

La machine illustrée par les figures 1 à 4 est capable de faire à la fois du bobinage, les roulettes 9 des têtes T1 à T4 étant maintenues à distance des pièces à bobiner (mandrins M) alors que celles-ci sont entraînées en rotation par les poupées 10 et de la dépose au contact.

Bien entendu, tous les mouvements, déplacements, rotations et actionnements des divers organes mobiles ou actifs, au cours du processus de bobinage, sont programmés et gérés par ordinateur.

Le caractère polyvalent (bobinage ou dépose au contact) de la machine permet un départ de bobinage plus facile et rapide car le fil est, au départ, collé sur la pièce à bobiner par la tête de bobinage.

La rotation de la tête de bobinage autour de l'axe vertical 8 permet de donner à l'enroulement du fil sur la pièce M l'inclinaison désirée par rapport à l'axe longitudinal de la pièce.

La machine est également capable d'effectuer sur les pièces M toutes opérations de dépose au contact des fils F, en suivant automatiquement le contour des pièces au fur et à mesure de leur rotation. Le déplacement en Z de la roulette de dépose 9 est assuré essentiellement par la poutre 6 et le vérin 36 porté par la tête de dépose est chargé essentiellement d'assurer une pression d'appui constante de ladite roulette sur la pièce à revêtir tout au long de la dépose au contact. Le suivi automatique de contour avec régulation de la pression de contact de la roulette 9 est obtenu à partir de l'analyse de la surface à revêtir et traitement par ordinateur des trajectoires désirées (conception et fabrication assistées par ordinateur).

Même si la machine ne comporte qu'une tête T de bobinage-dépose au contact, le fait, conformément à l'invention, de placer à poste fixe le cantre C, permet d'alléger la tête, de la rendre plus manoeuvrable, d'accroître le nombre de fils pouvant être, simultanément sur une même tête, bobinés et/ou déposés au contact, ce nombre pouvant être supérieur à six. En outre, en cas de rupture ou de problème de fil au niveau du cantre C, l'accès et la remise en état sont bien plus aisés et rapides.

Cependant, l'invention prend tout son intérêt dans la possibilité ainsi offerte de monter plusieurs têtes de bobinage-dépose au contact sur une même poutre-support mobile verticalement (Z), travaillant en parallèle et simultanément, en sorte que dans le même temps on réalise plusieurs pièces identiques, quatre dans l'exemple donné ici, mais pouvant être en nombre inférieur ou supérieur. Ceci diminue d'autant les coûts de production desdites pièces, dont on est sûr par ailleurs qu'elles ont les mêmes caractéristiques de bobinage-dépose au contact.

Par ailleurs, l'agencement particulier des moyens d'acheminement des fils F entre le cantre C et les têtes de bobinage-dépose au contact, permet une libre circulation autour de la machine sous le portique 1, réduit l'importance du balayage des fils lors des déplacements en X,Y des têtes de bobinage-dépose au contact. C'est ainsi qu'entre les poulies fixes 14 et les poulies 15 mobiles en X, les fils F balaient une surface en éventail vertical d'angle substantiellement réduit.

En outre, l'implantation des jeux de poulies 14 et 15 permet de réduire les à-coups de la vitesse de dévidage des fils. En effet, en l'absence du jeu de poulies 14 qui forme un volant de fils, entre le cantre C et le chariot 2, la traction sur les fils lors du déplacement des têtes de bobinage-dépose T1 à T4 pour aller de l'extrémité des pièces M côté cantre C à l'autre extrémité, serait plus forte et d'une amplitude sensiblement plus importante. Une telle réduction des à-coups de vitesse de dévidage est particulièrement sensible et intéressante à grande vitesse de bobinage car elle ménage d'autant les fils.

Au cours de la rotation des têtes autour de l'axe vertical 8, la grille 32 évite tout emmêlement des fils F, quel que soit l'éloignement de la roulette 9 vis à vis de la pièce 24.

Le dispositif à poulies à roue libre et galets presseurs (39,40 ; 39d,40d) évite le retour en arrière de chaque fil et donc le maintient en tension (côte amont), à chaque coupure de fil par le dispositif de coupe (55).

Le dispositif à galets d'entraînement à roue libre et galets presseurs (48, 51) permet la dissociation des deux extrémités du fil coupé, évitant le collage de l'extrémité amont par la roulette 9 à la dépose au contact ou en fin de bobinage et assure le poussage approprié des différents fils en direction de ladite roulette 9.

Le dispositif de compactage (62 à 76) assure un collage régulier et parfait des fils sur la surface revêtue en épousant les modifications d'inclinaison de la surface grâce aux roulettes 62,63 contraintes par les ressorts 73 de se plaquer constamment et automatiquement contre la surface de roulement.

Les moyens 81 à 92 d'asservissement de la délivrance de chaque fil F permettent à la machine de faire face aux variations de tension de fil résultant du mode de mise en place des fils.

La dépose au contact nécessite en effet des tensions de fil de l'ordre de 1,5 N, alors que le bobinage implique des tensions de fil allant jusqu'à 100 N.

Ces moyens permettent ainsi d'annuler la traction sur le fil pour faciliter le collage du fil sur la pièce au départ d'un bobinage ou d'une dépose au contact. En effet, dans ce cas, la tige du vérin 92 est escamotée et le bras 91 du pantin 87 prend une position vers la droite en considérant la figure 16, où le couple dû au ressort de rappel 93 est égal à celui dû à la traction du fil. Dans cette position, le moteur 86 tire sur le fil afin de presqu'annuler la tension due au moteur pneumatique 82 associé à la bobine B.

Lesdits moyens 81 à 92 assurent le freinage du fil lors du bobinage pour permettre le dévidage du fil sous une tension importante, celle-ci étant nécessaire pour décoller de la bobine le fil chargé de résine.

Pour ce faire, le vérin 92 est alimenté en air comprimé sous une pression réglable. Il vient appuyer le galet 90 sur le bras 91 du pantin, le forçant à venir sur la gauche en considérant la figure 16. Le potentiomètre 88 donne alors l'ordre au moteur 86 de freiner et non plus de tirer, jusqu'à ce que le couple dû à la tension du fil équilibre le couple exercé par le vérin 92 sur le pantin 87.

Le réglage de la tension du fil se fait en réglant la pression de l'air dans le vérin 92.

La tête T' de la figure 17 est plus spécialement destinée à une dépose au contact, mais peut tout aussi bien effectuer un bobinage. Plusieurs têtes T' peuvent être agencées en parallèle sur une même poutre-platine 7, à la manière des têtes T1 à T4 de la machine des figures 1 à 4.

Enfin, l'invention n'est évidemment pas limitée aux modes de réalisation décrits ci-dessus mais en couvre au contraire toutes les variantes.

## Revendications

1. Machine pour le bobinage-dépose au contact simultané d'une pluralité de fils individuels (F), comprenant :
- un portique (1) supportant une platine (7) porte-tête de bobinage-dépose au contact, mobile dans les trois directions de repérage cartésien (X,Y,Z),
- au moins une tête de bobinage-dépose au contact (T) montée mobile en rotation sur la platine (7) autour d'au moins un axe vertical (8) et comportant une roulette de bobinage-dépose au contact (9) mobile sur la tête en direction du support à revêtir (M), des moyens de présentation sur ladite roulette des fils suivant au moins deux nappes tangentes (F1, F2), des moyens sélectifs (48,51 ; 55) d'entraînement et de coupe de chaque fil, et - une pluralité de bobines (B) délivrant lesdits fils (F),
caractérisée en ce que lesdites bobines (B) sont montées sur un cantre fixe (C) et les fils (F) sont guidés entre le cantre (C) et la ou chaque tête de bobinage-dépose au contact (T) par des jeux de poulies de renvoi (14, 15, 17, 19) destinées à guider les fils (F) entre le cantre fixe (C) et la ou chaque tête (T), lesdits jeux comprenant, d'une part, un premier jeu de poulies fixes (14) d'axe horizontal, proche du sol et orthogonal au support à revêtir (M), d'autre part, un deuxième jeu de poulies (15, 17) solidaires de ladite platine (7) porte-tête(s) et d'axe parallèle à celui du premier jeu, les deux jeux susdits étant agencés de façon que les fils (F) entre le premier et le second jeu se déplacent dans un plan sensiblement vertical, en fonction du mouvement de la ou des têtes (T) et, enfin, un troisième jeu de poulies en cascade (19) également solidaires de ladite platine (7) et amenant les fils (F) dudit deuxième jeu de poulies (15, 17) à un jeu de poulies (20) fixé sur ladite platine (7) au dessus de la ou chaque tête (T).

2. Machine suivant la revendication 1, plus particulièrement destinée au bobinage-dépose au contact de pièces allongées entraînées en rotation autour de leur axe, caractérisée en ce qu'elle comporte plusieurs têtes (T1 à T4) montées en parallèle sur la platine (7), alimentées en fils (F) par le même cantre (C) et aptes à revêtir par bobinage ou dépose au contact simultanément autant de pièces (M) disposées en parallèle sur un même banc (10,11) assurant la rotation de chaque pièce en synchronisme avec la machine.

3. Machine suivant la revendication 1 ou 2, caractérisée en ce que chaque tête de bobinage-dépose au contact (T1 à T4) comporte :
- une bride circulaire (24) munie d'un passage central (33) pour les fils (F) et fixée à une pièce (23) montée sur ladite platine (7), entraînée en rotation autour dudit axe vertical (8) et munie d'un passage central (25) pour les fils,
- un support (38) monté sur la bride (24) en sorte de se déplacer en translation suivant un axe confondu avec l'axe de rotation (8) de la tête, ledit support portant ladite roulette de bobinage-dépose au contact (9) et lesdits moyens (48 à 55) d'entraînement et coupe des fils ainsi que des jeux (39,40) de poulies de guidage des fils et anti-retour,
- lesdits fils (F) étant amenés en étant regroupés en un faisceau parallèle sensiblement dans l'axe desdites bride (24) et pièce rotative (23) et guidés à l'aide d'une grille guide-fil (29) montée libre en rotation dans ledit passage central (25) de ladite pièce rotative (23).

4. Machine suivant l'une des revendications 1 à 3, caractérisée en ce qu'à chaque fil (F) de chaque tête de bobinage-dépose au contact (T1 à T4) est associé un dispositif d'entraînement comprenant un galet (48) monté sur une roue libre (49) entraînée en même temps que la roulette de bobinage-dépose au contact (9) mais avec une vitesse périphérique légèrement inférieure à celle de ladite roulette et un galet presseur (51) muni de moyens (52) d'application ou non sur ledit galet (48) et un dispositif anti-retour de fil constitué d'une poulie (39a,39b,39c ; 40a,40b,40c) montée sur roue libre et associée à un galet presseur (39d,40d).

5. Machine suivant l'une des revendications 1 à 4, caractérisée en ce que chaque tête de bobinage-dépose au contact (T1 à T4) comporte un dispositif de compactage des fils (F) plaqués sur la pièce à revêtir, disposé immédiatement en amont de la roulette de dépose (9) et constitué de deux roulettes (62,63) indépendantes, libres en rotation autour de deux axes croisés (68,69) qui passent respectivement au milieu de la zone de contact de chaque roulette avec la surface à revêtir et permettent l'orientation de chaque roulette indépendamment par rapport à cette surface, des moyens (73) étant prévus pour plaquer en permanence lesdites roulettes (62,63) contre la surface à revêtir (77 ; 78,79).

6. Machine suivant l'une des revendications 1 à 5, caractérisée en ce que les fils (F) sont guidés entre le cantre (C) et chaque tête de bobinage-dépose au contact (T1 à T4) par un premier jeu de poulies (14) fixes, disposées latéralement à l'espace d'évolution de la ou des têtes, au voisinage du sol, par un second jeu de poulies (15) solidaires de l'un des chariots (2) mobiles sur le portique et agencées en sorte que les fils (F), entre les deux jeux de poulies susdits, se déplacent en balayage suivant sensiblement un plan vertical, par des jeux de poulies en cascade (17,19) solidaires dudit chariot (2) et par un jeu de poulies (20) solidaires de ladite platine (7) porte-tête et agencées à l'aplomb de ladite tête (T1 à T4).

7. Machine suivant l'une des revendications 1 à 6, caractérisée en ce que la bride (24) de chaque tête de bobinage-dépose au contact (T') est montée rotative sur une première embase (100), elle-même montée rotative sur une seconde embase (103), montée rotative sur ladite platine (7) autour dudit axe vertical (8), l'axe de rotation (95) de la première embase (100) étant perpendiculaire à la fois à l'axe de rotation (96) de ladite bride (24) et à l'axe de rotation (8) de ladite seconde embase (103) et en ce que les fils sont guidés dans des passages (25, 104, 107, 33) ménagés respectivement dans la pièce (23) d'entraînement en rotation de la seconde embase (103), dans la seconde embase (103), dans la première embase (100) et dans ladite bride (24), par l'intermédiaire, d'une part, d'une grille guide-fil (29) montée libre en rotation dans le passage (25) de ladite pièce d'entrainement (23) et, d'autre part, d'un jeu de poulies (106) porté par ladite première embase (100).

8. Machine suivant l'une des revendications 1 à 7, caractérisée en ce que le cantre (C) est muni, pour chaque fil F, d'un dispositif de délivrance-freinage-annulation de tension de dévidage comprenant un moteur pneumatique (82) d'entraînement en rotation de la bobine de fil (B) et un dispositif d'asservissement du type pantin constitué d'un moto-variateur électrique (86) entraînant une poulie (85) de tirage du fil, d'un pantin (87), d'un potentiomètre (88) dont l'axe de rotation est solidaire de l'axe de rotation du pantin et dont le point milieu commande l'entrée du variateur dudit moto-variateur (86) et d'un moyen (90,92) de contrôle du bras (91) dudit pantin (87), en vue de permettre le dévidage du fil avec des tensions appropriées au bobinage et à la dépose au contact.

9. Machine suivant l'une des revendications 1 à 8, caractérisée en que les organes de coupe (55) des fils de chaque nappe (F1,F2) sont commandés par des leviers (56) articulés sur un même axe (57) traversant la plaque support (38) de chaque tête de bobinage-dépose au contact (T,T'), et commandés par des vérins superposés (58) disposés de l'autre côté de ladite plaque support (38) par rapport auxdits organes de coupe (55), par l'intermédiaire d'une liaison à leviers (59) et de pièces de rotation coaxiales (60) traversant ladite plaque-support (38).

## Claims

1. Machine for the simultaneous winding/contact laying down of a plurality of individual wires (F), comprising:
- a frame (1) supporting a winding/contact laying down head-carrier plate (7), movable in the three Cartesian coordinate frame directions (X, Y, Z),
- at least one winding/contact laying down head (T) mounted rotationally movable on the plate (7) around at least one vertical axis (8) and comprising a winding/contact laying down small wheel (9) movable on the head in the direction of the support to be covered (M), means for presenting, on said small wheel, wires in at least two tangential sheets (F1, F2), selective means (48, 51; 55) for driving and cutting each wire, and
- a plurality of reels (B) delivering said wires (F),
characterised in that said reels (B) are mounted on a fixed creel(C) and the wires (F) are guided between the creel (C) and the or each winding/contact laying down head (T) by sets of guide pulleys (14, 15, 17, 19) intended to guide the wires (F) between the fixed creel (C) and the or each head (T), said sets comprising, on the one hand, a first set of fixed pulleys (14) having a horizontal axis, close to the ground and orthogonal to the support to be covered (M), on the other hand, a second set of pulleys (15, 17) integral with said head-carrier plate (7) and having an axis parallel to that of the first set, the above-said two sets being arranged so that the wires (F) between the first and second sets move in a substantially vertical plane, according to the movement of the head or heads (T) and, finally, a third set of cascaded pulleys (19) also integral with said plate (7) and conveying the wires (F) from the second set of pulleys (15, 17) to a set of pulleys (20) fixed on the said plate (7) above the or each head (T).

2. Machine according to Claim 1, more particularly intended for the winding/contact laying down of elongated components driven rotationally around their axis, characterised in that it comprises a number of heads (T1 to T4) mounted in parallel on the plate (7), fed with wires (F) by the same creel (C) and capable of simultaneously covering by winding or contact laying down as many components (M) disposed in parallel on the same bed (10, 11) providing the rotation of each component in synchronism with the machine.

3. Machine according to Claim 1 or 2, characterised in that each winding/contact laying down head (T1 to T4) has:
- a circular collar (24) provided with a central passage (33) for the wires (F) and fixed to a component (23) mounted on said plate (7), driven rotationally around said vertical axis (8) and provided with a central passage (25) for the wires,
- a support (38) mounted on the collar (24) so as to move translationally along an axis identical to the axis of rotation (8) of the head, said support carrying said winding/contact laying down small wheel (9) and said means (48 to 55) of driving and cutting the wires as well as sets (39, 40) of wire-guidance and non-return pulleys,
- said wires (F) being conveyed by being grouped together in a substantially parallel bundle in the axis of said collar (24) and rotary component (23) and guided with the help of a wire-guide grille (29) mounted freely rotating in said central passage (25) of said rotary component (23).

4. Machine according to one of Claims 1 to 3, characterised in that, with each wire (F) of each winding/contact laying down head (T1 to T4), a drive device is associated comprising a roller (48) mounted on a free wheel (49) driven at the same time as the winding/contact laying down small wheel (9) but with a peripheral speed slightly lower than that of said small wheel and a presser roller (51) provided with means (52) of application or not onto said roller (48) and a wire non-return device composed of a pulley (39a, 39b, 39c; 40a, 40b, 40c) mounted on a free wheel and associated with a presser roller (39d, 40d).

5. Machine according to one of Claims 1 to 4, characterised in that each winding/contact laying down head (T1 to T4) has a device for compacting the wires (F) laid on the component to be covered, disposed immediately upstream of the laying down small wheel (9) and composed of two independent small wheels (62, 63), freely rotating around two crossed axes (68, 69) which pass respectively through the middle of the area of contact of each small wheel with the surface to be covered and allow the orientation of each small wheel independently with respect to this surface, means (73) being provided for permanently laying said small wheels (62, 63) against the surface to be covered (77; 78, 79).

6. Machine according to one of Claims 1 to 5, characterised in that the wires (F) are guided between the creel (C) and each winding/contact laying down head (T1 to T4) by a first set of fixed pulleys (14), disposed laterally to the manoeuvring space of the head or heads, in the vicinity of the ground, by a second set of pulleys (15) integral with one of the movable carriages (2) on the frame and arranged so that the wires (F), between the above-said two sets of pulleys, move by sweeping substantially in a vertical plane, by sets of cascaded pulleys (17, 19) integral with said carriage (2) and by a set of pulleys (20) integral with said head-carrier plate (7) and arranged directly above said head (T1 to T4).

7. Machine according to one of Claims 1 to 6, characterised in that the collar (24) of each winding/contact laying down head (T') is mounted rotating on a first base plate (100), itself mounted rotating on a second base plate (103), mounted rotating on said plate (7) around said vertical axis (8), the axis of rotation (95) of the first base plate (100) being perpendicular both to the axis of rotation (96) of said collar (24) and to the axis of rotation (8) of said second base plate (103), and in that the wires are guided in passages (25, 104, 107, 33) made respectively in the component (23) for rotationally driving the second base plate (103), in the second base plate (103), in the first base plate (100) and in said collar (24), by means of, on the one hand, a wire-guide grille (29) mounted freely rotating in the passage (25) of said driving component (23) and, on the other hand, a set of pulleys (106) carried by said first base plate (100).

8. Machine according to one of Claims 1 to 7, characterised in that the creel (C) is provided, for each wire (F), with a device for delivering/braking/cancelling reeling tension comprising a compressed air motor (82) for rotationally driving the wire reel (B) and an automatic control device of the poppet type composed of an electric variable speed motor (86) driving a wire drawing pulley (85), a poppet (87), a potentiometer (88) whose axis of rotation is integral with the axis of rotation of the poppet and whose centre point controls the input of the variator of the said variable speed motor (86) and a means (90, 92) of controlling the arm (91) of said poppet (87), with a view to allowing the unreeling of the wire with tensions appropriate to the winding and to the contact laying down.

9. Machine according to one of Claims 1 to 8, characterised in that the mechanisms for cutting (55) the wires of each sheet (F1, F2) are controlled by levers (56) articulated on one and the same axis (57) passing through the support plate (38) of each winding/contact laying down head (T, T'), and controlled by superposed jacks (58) disposed on the other side of said support plate (38) with respect to said cutting mechanisms (55), by means of a linkage of levers (59) and coaxially rotating components (60) passing through said support plate (38).

## Patentansprüche

1. Maschine zum gleichzeitigen Bewickeln/Belegen mehrerer einzelner Fasern (F), mit:
- einem Portalrahmen (1), der eine Trägerkopfplatte (7) zum Bewickeln/Belegen trägt, die in den drei Richtungen des kartesischen Koordinatensystems (X, Y, Z) beweglich ist,
- wenigstens einem Kopf (T) zum Bewickeln/Belegen, der an der Platte (77) um wenigstens eine vertikale Achse (8) rotatorisch beweglich angebracht ist und eine Rolle (9) zum Bewickeln/Belegen, die am Kopf in Richtung des zu überziehenden Trägers (M) beweglich ist, Mittel, die der Rolle Fasern in wenigstens zwei tangentialen Lagen (F1, F2) darbieten, und selektive Mittel (48, 51; 55) zum Antreiben und Schneiden jeder Faser enthält und
- mehreren Spulen (B), die die Fasern (F) liefern,
dadurch gekennzeichnet, daß die Spulen (B) an einem festen Gatter (C) angebracht sind und die Fasern (F) zwischen dem Gatter (C) und dem oder jedem Kopf (T) zum Bewickeln/Belegen durch Sätze von Umlenkrollen (14, 15, 17, 19) geführt werden, die dazu vorgesehen sind, die Fasern (F) zwischen dem festen Gatter (C) und dem oder jedem Kopf (T) zu führen, wobei die Sätze einerseits einen ersten Satz fester Rollen (14) mit horizontaler Achse in der Nähe des Bodens und senkrecht zu dem zu überziehenden Träger (M) und andererseits einen zweiten Satz Rollen (15, 17), die an der Platte (7) befestigt sind und eine zu derjenigen des ersten Satzes parallele Achse aufweisen, wobei die beiden obengenannten Sätze in der Weise angeordnet sind, daß die Fasern (F) sich zwischen dem ersten und dem zweiten Satz in einer im wesentlichen vertikalen Ebene in Abhängigkeit von der Bewegung des oder der Köpfe (T) bewegen, und schließlich einen dritten Satz Rollen (19) umfassen, die in Kaskade angeordnet sind, ebenfalls mit der Platte (7) verbunden sind und die Fasern (F) vom zweiten Satz Rollen (15, 17) zu einem an der Platte (7) oberhalb des oder jedes Kopfes (T) befestigten Satz Rollen (20) führen.

2. Maschine nach Anspruch 1, die insbesondere zum Bewickeln/Belegen von rotatorisch um ihre Achse angetriebenen, langgestreckten Teilen vorgesehen ist, dadurch gekennzeichnet, daß sie mehrere Köpfe (T1 bis T4) enthält, die an der Platte (7) parallel angebracht sind, mit Fasern F durch dasselbe Gatter (C) versorgt werden und durch gleichzeitiges Bewickeln oder Belegen sämtliche Teile (M) überziehen können, die auf derselben Bank (10, 11), die die Drehung jedes Teils synchron mit der Maschine sicherstellt, parallel angeordnet sind.

3. Maschine nach Anspruch 1 oder 2, dadurch gekennzeichnet, daß jeder Kopf (T1 bis T4) zum Bewickeln/Belegen enthält:
- einen kreisförmigen Flansch (24), der mit einem zentralen Durchlaß (33) für die Fasern (F) versehen ist und an einem Teil (23) befestigt ist, das an der Platte (7) angebracht ist, rotatorisch um die vertikale Achse (8) angetrieben wird und mit einem mittigen Durchlaß (25) für die Fasern versehen ist,
- einen Träger (38), der am Flansch (24) in der Weise angebracht ist, daß er sich translatorisch längs einer mit der Drehachse (8) des Kopfes zusammenfallenden Achse verschieben kann, wobei der Träger die Rolle (9) zum Bewickeln/Belegen und die Mittel (48 bis 55) zum Antreiben und Schneiden der Fasern sowie die Sätze (39, 40) von Faserführungsrollen und Rückdrehsicherungssrollen trägt,
- wobei die Fasern (F) durch Umgruppierung in ein Bündel, das zur Achse des Flansches (24) und des drehbaren Teils (23) im wesentlichen parallel ist, und durch Führen mit Hilfe einer Faserführungsscheibe (29), die frei drehbar im mittigen Durchlaß (25) des drehbaren Teils (23) angebracht ist, geführt werden.

4. Maschine nach einem der Ansprüche 1 bis 3, dadurch gekennzeichnet, daß jeder Faser (F) jedes Kopfes (T1 bis T4) zum Bewickeln/Belegen eine Antriebsvorrichtung zugeordnet ist, die eine Walze (48), die an einem freien Rad (49) angebracht ist, das gleichzeitig mit der Rolle (9) zum Bewickeln/Belegen angetrieben wird, jedoch mit einer Umfangsgeschwindigkeit, die etwas niedriger als jene der Rolle ist, sowie eine Druckwalze (51) enthält, die mit Mitteln (52) zum Anpressen an die Walze (48) und mit einer Faserrückdrehsicherungsvorrichtung versehen ist, die aus einer Rolle (39a, 39b, 39c; 40a, 40b, 40c) gebildet ist, die an dem freien Rad angebracht ist und der eine Druckwalze (39d, 40d) zugeordnet ist.

5. Maschine nach einem der Ansprüche 1 bis 4, dadurch gekennzeichnet, daß jeder Kopf (T1 bis T4) zum Bewickeln/Belegen eine Vorrichtung zur Verdichtung der auf das zu überziehende Teil aufgebrachten Fasern (F) enthält, die direkt vor der Belegungsrolle (9) angeordnet ist und aus zwei unabhängigen Rollen (62, 63) gebildet ist, die um zwei gekreuzte Achsen (68, 69), die jeweils durch die Mitte der Kontaktzone jeder Rolle mit der zu überziehenden Oberfläche verlaufen und die Orientierung jeder Rolle unabhängig von dieser Oberfläche ermöglichen, frei drehbar sind, wobei Mittel (73) vorgesehen sind, um die Rollen (62, 63) ständig gegen die zu überziehende Oberfläche (77; 78, 79) zu pressen.

6. Maschine nach einem der Ansprüche 1 bis 5, dadurch gekennzeichnet, daß die Fasern (F) zwischen dem Gatter (C) und jedem Kopf (T1 bis T4) zum Bewickeln/Belegen durch einen ersten Satz fester Rollen (14), die seitlich zum Bewegungsraum des oder der Köpfe in der Nähe des Bodens angeordnet sind, durch einen zweiten Satz Rollen (15), die mit einem der am PortalGatter beweglichen Schlitten (2) verbunden und in der Weise angeordnet sind, daß sich die Fasern (F) zwischen den beiden obengenannten Sätzen von Rollen bewegen indem sie eine im wesentlichen vertikale Ebene überstreichen, durch in Kaskade angeordnete Sätze (17, 19) von Rollen, die mit dem Schlitten (2) verbunden sind, und durch einen Satz (20) von Rollen, die mit der Trägerkopfplatte (7) verbunden und senkrecht zum Kopf (T1 bis T4) angeordnet sind, geführt werden.

7. Maschine nach einem der Ansprüche 1 bis 6, dadurch gekennzeichnet, daß der Flansch (24) jedes Kopfes (T') zum Bewickeln/Belegen an einer ersten Fußplatte (100) drehbar angebracht ist, die ihrerseits an einer zweiten Fußplatte (103) drehbar angebracht ist, die an der Platte (7) drehbar um die vertikale Achse (8) angebracht ist, wobei die Drehachse (95) der ersten Fußplatte (100) zugleich zur Drehachse (96) des Flansches (24) und zur Drehachse (8) der zweiten Fußplatte (103) senkrecht ist, und daß die Fasern in den Durchlässen (25, 104, 107, 33), die in dem Teil (23) zum rotatorischen Antrieb der zweiten Fußplatte (103), in der zweiten Fußplatte (103), in der ersten Fußplatte (100) bzw. in dem Flansch (24) ausgebildet sind, einerseits über eine Faserführungsscheibe (29), die im Durchlaß (25) des Antriebsteils (23) frei drehbar angebracht ist, und andererseits über einen Satz (106) von Rollen, der von der ersten Fußplatte (100) getragen wird, geführt werden.

8. Maschine nach einem der Ansprüche 1 bis 7, dadurch gekennzeichnet, daß der Gatter (C) für jede Faser (F) mit einer Vorrichtung zum Anlegen, Bremsen und Beseitigen einer Abhaspelspannung versehen ist, die einen pneumatischen Motor (82) für den rotatorischen Antrieb der Faserspule (B) und eine Regelungsvorrichtung des Schwenkelement-Typs enthält, die gebildet ist aus einem elektrischen Drehzahlvariator (86), der eine Faserzugrolle (85) antreibt, einem Schwenkelement (87), einem Potentiometer (88), dessen Drehachse mit der Drehachse des Schwenkelements verbunden ist und dessen Mittelpunkt den Eingang des Variators des Drehzahlvariators (86) steuert, und einem Mittel (90, 92) zum Steuern des Arms (91) des Schwenkelements (87), um das Abhaspeln der Faser mit für das Bewickeln/Belegen geeigneten Spannungen zu ermöglichen.

9. Maschine nach einem der Ansprüche 1 bis 8, dadurch gekennzeichnet, daß die Elemente (55) zum Schneiden der Fasern jeder Lage (F1, F2) durch Hebel (56), die an derselben Achse (57), die durch die Trägerkopfplatte (38) jedes Kopfes (T, T') zum Bewickeln/Belegen verläuft, angelenkt sind, und durch darüber angeordnete Stellzylinder (58), die in bezug auf die Schneidelemente (55) auf der anderen Seite der Trägerkopfplatte (38) angeordnet sind, über eine Hebelverbindung (59) und über koaxiale Drehteile (60), die durch die Trägerkopfplatte (38) verlaufen, gesteuert werden.
